# EUROPÄISCHE PATENTSCHRIFT

(11) **EP 1 424 252 B1**
(45) Veröffentlichungstag und Bekanntmachung des Hinweises auf die Patenterteilung: **06.02.2008**
(21) Anmeldenummer: 04004483.6
(22) Anmeldetag: 11.03.1999
(51) Int. Cl.: B60S 1/08, B60Q 1/14

(54) **Optischer Sensor**
Optical sensor
Capteur optique

(30) Priorität: 17.03.1998 DE 19811529; 28.08.1998 DE 19839273
(43) Veröffentlichungstag der Anmeldung: 02.06.2004
(62) Teilanmeldung aus: 99914438.9
(73) Patentinhaber: ROBERT BOSCH GMBH, 70442 Stuttgart (DE)
(72) Erfinder: Michenfelder, Gebhard, 77839 Lichtenau (DE); Pientka, Rainer, 77871 Renchen (DE); Riehl, Guenther, 77815 Buehl (DE); Trunz, Stefanie, 76534 Baden-Baden (DE); Burkart, Manfred, 76473 Iffezheim (DE); Schrodt, Stephan, 76229 Karlsruhe (DE); Roth, Klaus, 73207 Plochingen (DE)

(56) Entgegenhaltungen:
- EP-A- 0 009 414
- EP-A- 0 208 610
- EP-A- 0 537 471
- DE-A- 19 545 604
- DE-A- 19 630 216
- DE-A- 19 704 818
- FR-A- 2 722 291
- PATENT ABSTRACTS OF JAPAN vol. 007, no. 187 (M-236), 16. August 1983 (1983-08-16) & JP 58 089430 A (NIPPON DENSO KK), 27. Mai 1983 (1983-05-27)

## Beschreibung

Die Erfindung betrifft einen optischen Sensor mit den im Oberbegriff des Anspruchs 1 genannten Merkmalen.

### Stand der Technik

Es sind Scheibenwischvorrichtungen für Windschutzscheiben von Kraftfahrzeugen bekannt, bei denen eine Steuerung der Scheibenwischer nicht nur über einen manuell betätigbaren Lenkstockhebel, sondern zusätzlich über einen optischen Regensensor erfolgt. Der optische Regensensor umfaßt eine Lichtquelle, deren elektromagnetische Strahlung von der Windschutzscheibe, je nach Feuchtigkeitsbelag auf der Windschutzscheibe, unterschiedlich reflektiert wird. Der reflektierte Anteil wird mittels eines Photoelementes erfaßt, so daß ein dem Feuchtigkeitsbelag entsprechendes Ausgangssignal des Regensensors bereitgestellt werden kann. Diese Ausgangssignale können derart ausgewertet und zur Steuerung der Scheibenwischer verwendet werden, daß sowohl die Einschaltung der Scheibenwischvorrichtung als auch eine Wischergeschwindigkeit in Abhängigkeit von einer erfaßten Benetzung der Windschutzscheibe variiert werden kann.

Weiterhin sind Vorrichtungen zur automatischen Einschaltung einer Beleuchtungsanlage im Kraftfahrzeug bekannt. Durch Messung eines Ausgangssignals eines Photoelementes wird auf eine Umgebungshelligkeit des Kraftfahrzeuges geschlossen und in Abhängigkeit davon eine Fahrzeugbeleuchtung ohne Zutun eines Fahrers eingeschaltet.

Weiters ist aus der DE-C-4 300 741 ist ein optischer Sensor mit den Merkmalen des Oberbegriffs des Anspruchs 1 bekannt.

### Vorteile der Erfindung

Der erfindungsgemäße optische Sensor mit den im Anspruch 1 genannten Merkmalen weist insbesondere den Vorteil auf, einen kombinierten Sensor zur Steuerung der für einen Fahrer wichtigen sichtverbessernden Fahrzeugausrüstung bereitzustellen. Neben einem Regensensor zur Steuerung einer Scheibenwischanlage ist ein Sensor zur Erfassung einer Außenhelligkeit in dem optischen Sensor integriert, so daß in Abhängigkeit von der gemessenen Umgebungshelligkeit eine Beleuchtungsanlage ein- und ausgeschaltet werden kann und in Abhängigkeit einer Benetzung der Windschutzscheibe mit Niederschlag die Scheibenwischanlage automatisch ansteuerbar ist.

In bevorzugter Ausgestaltung der Erfindung kann anhand der erfaßten sichtbeeinflussenden Parameter, nämlich im wesentlichen Niederschläge in Form von Regen, Nebel oder Schneefall sowie die Umgebungshelligkeit, eine kombinierte Steuerung der Scheibenwischanlage und der Beleuchtungsanlage realisiert werden. So kann es einerseits bei starkem Regen sinnvoll sein, neben den Scheibenwischern zusätzlich die Fahrzeugscheinwerfer einzuschalten. Andererseits ist es bei Dunkelheit aufgrund der wesentlich erhöhten Blendgefahr durch Scheinwerferlicht entgegenkommender Fahrzeuge noch wichtiger als tagsüber, die Windschutzscheibe jederzeit von Nässe freizuhalten. Daher ist es sinnvoll, bei Dunkelheit eine erhöhte Empfindlichkeit der Scheibenwischersteuerung bereits auf geringe Benetzungsgrade der Windschutzscheibe vorzusehen. Eine Umschaltung der Regensensor-Empfindlichkeit zur Ansteuerung der Scheibenwischanlage kann vorzugsweise durch ein von einem Umgebungslichtsensor gebildetes Signal beeinflußt werden.

Eine Kombination von Regen- und Außenlichtsensor in einem gemeinsamen optischen Sensor weist zudem den Vorteil einer erheblichen Installations- und Montagevereinfachung auf, woraus zudem eine Kostenreduzierung resultiert. Durch eine Montage aller erforderlichen elektronischen und optoelektronischen Bauteile auf einer gemeinsamen Platine, vorzugsweise in SMD(surface mounted device)-Technik bestückt, lassen sich sehr kompakte Sensoren realisieren, die sich zudem im Fahrzeug problemlos montieren lassen. So kann ein derartiger optischer Sensor ebenso kompakt ausgeführt sein wie bekannte Regensensoren und wie diese beispielsweise hinter einem Innenrückspiegel an der Innenseite der Windschutzscheibe montiert sein.

In der Erfindung ist neben einem Helligkeitssensor für Umgebungslicht, der ein weitgehend vom Tageslicht beeinflußtes Signal liefert und dementsprechend einen relativ weiten und vorzugsweise nach oben gerichteten Öffnungskegel für einfallendes Licht aufweist, wenigstens ein zusätzlicher Fernsensor vorgesehen sein, der einen schmalen und vorzugsweise in Fahrtrichtung nach vorne gerichteten Öffnungskegel aufweist. Dadurch ist dieser Fernsensor in der Lage, mit relativ hoher Zuverlässigkeit Tunneleinfahrten oder Unterführungen zu erkennen und somit bereits frühzeitig ein Signal zur Einschaltung der Fahrzeugbeleuchtung zu liefern.

Die Fokussierung des einfallenden Lichts kann in vorteilhafter Weise durch einen Lichtleiter erfolgen, der gleichzeitig als Grundplatte für das Sensorgehäuse fungiert. Ein solcher Lichtleiter kann beispielsweise aus einem Kunststoff wie PMMA (Polymethylmetachrylat) im Spritzgußverfahren hergestellt sein, wobei sich in einfacher Weise optische Strukturen wie Sammellinsen im Formprozeß einbringen lassen.

Die Verbindung zur Windschutzscheibe kann entweder durch einen Rahmen auf der Scheibe und darin eingeklipstem Sensorgehäuse oder auch in sehr einfacher Weise mittels einer doppelseitig selbstklebenden transparenten Folie realisiert werden.

In einer weiteren bevorzugten Ausgestaltung lassen sich zusätzliche Steuerungsfunktionen implementieren, beispielsweise eine Zuschaltung von Nebelscheinwerfern. Durch einen entsprechend empfindlichen Regensensor kann dieser die Tropfengröße erkennen und damit unterscheiden, ob die Benetzung der Scheibe auf Regen, Nebel oder Schneefall beruht. Bei starkem Nebel oder Schneefall können so neben den Scheibenwischern die Nebelscheinwerfer und/oder die Nebelschlußleuchten zugeschaltet werden und damit eine weitere Erhöhung der Fahrsicherheit erreicht werden. So kann vorzugsweise bei Nebel ein aus feinsten Tröpfchen bestehender Niederschlag auf der Windschutzscheibe durch den Regensensor detektiert werden. Über eine entsprechende Auslegung einer Software zur Auswertung der Regensensorsignale kann dann eine Zuschaltung einzelner Bestandteile der Lichtanlage (Nebelleuchte, Nebelschlußleuchte) ausgelöst werden.

In den Beispielen, die in den Ansprüchen nicht erfasst sind, ist vorgesehen, daß sowohl der Empfänger des Regensensors als auch wenigstens einer der Empfänger des Umgebungshelligkeitssensors und/oder des Fernsensors von einem gemeinsamen Photoelement gebildet sind. Hierdurch läßt sich der Aufwand an einzusetzenden optoelektronischen Bauelementen für den kombinierten Regensensor und Außenlichtsensor des Kraftfahrzeuges reduzieren. Der Empfänger kann somit eine Doppelfunktion zur Bereitstellung von Ansteuersignalen sowohl für die Scheibenwischanlage als auch für die Beleuchtungsanlage des Kraftfahrzeuges übernehmen. Insbesondere ist bevorzugt, wenn ein Lichtleiter des optischen Sensors Strukturen aufweist, die eine entsprechende Fokussierung der zu sensierenden elektromagnetischen Wellen auf das gemeinsame Photoelement übernimmt. Somit kann mit einfachen Mitteln sowohl die Umgebungshelligkeit als auch die Benetzung der Windschutzscheibe sensiert werden.

In weiterer bevorzugter Ausgestaltung der Erfindung ist vorgesehen, daß die Sendediode des Regensensors getaktet ansteuerbar ist. Hierdurch kann der gemeinsame Empfänger entsprechend eines Tastverhältnisses der getakteten Ansteuerung die empfangenen Signale der Regensensorfunktion beziehungsweise der automatischen Lichtsteuerungsfunktion des optischen Sensors zuordnen.

Weitere bevorzugte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: eine schematische Schnittansicht eines erfindungsgemäßen optischen Sensors;
- Figur 2: eine schematische Draufsicht auf den optischen Sensor;
- Figur 3: eine alternative Ausführungsform des erfindungsgemäßen optischen Sensors;
- Figur 4: den optischen Sensor gemäß Figur 3 in einer Seitenansicht;
- Figur 5: den optischen Sensor gemäß Figur 3 in einer Draufsicht;
- Figuren 6a bis 6d: unterschiedliche Öffnungswinkel des Fernsensors und Umgebungslichtsensors in schematischen Prinzipdarstellungen;
- Figuren 7 und 8: mögliche Ausstattungsvarianten des optischen Sensors und
- Figuren 9 und 10: schematische Beispiele einzelner Bauelemente des Sensors, die von den Ansprüchen nicht abgedeckt werden.

### Beschreibung der Ausführungsbeispiele

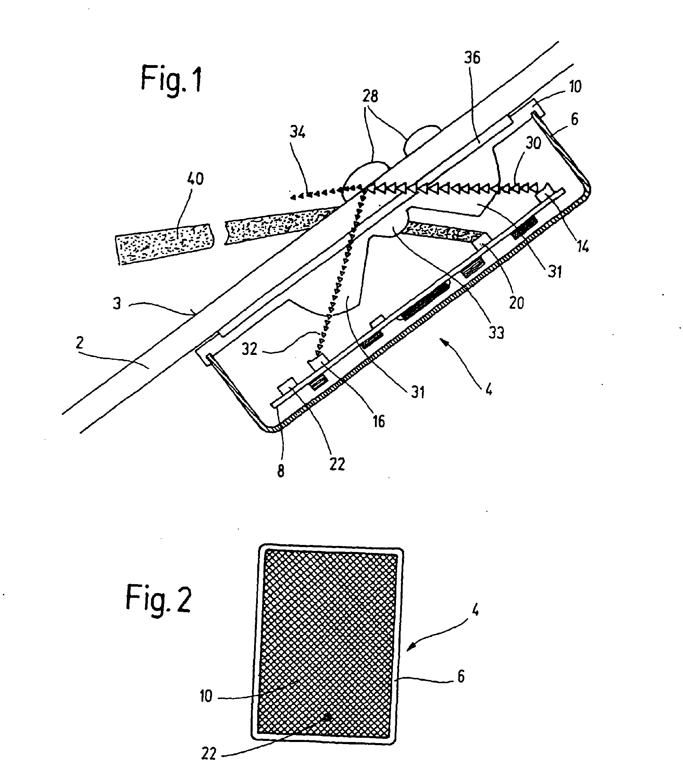

Figur 1 zeigt in einer schematischen Schnittansicht einen erfindungsgemäßen optischen Sensor 4, der innen an einer Windschutzscheibe 2 eines Kraftfahrzeuges befestigt ist. Die Montage des optischen Sensors 4 hinter der Windschutzscheibe 2 kann beispielsweise durch Klebung in Höhe eines hier nicht dargestellten Innenrückspiegels erfolgen. Bei einer solchen Positionierung entsteht keine zusätzliche Sichtbehinderung für einen Fahrer. Optische und elektronische Bauteile des optischen Sensors 4 sind umschlossen von einem Gehäuse 6, das nach innen hin, das heißt zum Fahrgastraum, lichtundurchlässig ist.

Im Gehäuse 6 ist eine Platine 8 angeordnet, auf der die optischen und elektronischen Bauelemente, beispielsweise in SMD(surface mounted device)-Technik, montiert sind. Erkennbar ist eine auf der Oberseite der Platine 8 montierte LED (Leuchtdiode) 14, die sichtbares oder infrarotes Licht in Form eines gerichteten Lichtstrahles 30 emittiert, der in einem spitzen Winkel auf die Windschutzscheibe 2 auftrifft und aufgrund deren Brechungsindex an ihrer äußeren Grenzfläche 3 zur Luft normalerweise vollständig reflektiert wird und nahezu vollständig als reflektierter Anteil 32 auf eine Photodiode 16 trifft, die ebenfalls auf der Oberseite der Platine 8 montiert ist. Die LED 14 und die Photodiode 16 sind so auf der Platine 8 positioniert, daß entsprechend der Lichtbrechung nach den Gesetzen der Optik der reflektierte Anteil 32 auf die Photodiode 16 trifft.

Befindet sich nun am Ort der Reflexion des Lichtstrahls 30 ein Wassertropfen 28 außen auf der Windschutzscheibe 2, resultiert an der äußeren Grenzfläche 3 der Scheibe zur Luft ein verändertes Brechungsverhalten, wodurch der Lichtstrahl 30 an der Grenzfläche 3 nicht vollständig reflektiert wird, sondern ein nach außen austretender gestreuter Anteil 34 entsteht. Das dadurch abgeschwächte Signal des reflektierten Anteiles 32 kann von der Photodiode 16 detektiert und durch eine Auswerteelektronik quantitativ ausgewertet werden und somit als Feuchtigkeitsschleier beziehungsweise Regen außen auf der Windschutzscheibe 2 des Kraftfahrzeuges 1 erfaßt werden.

Die gewünschte Fokussierung des Lichtstrahles 30 beziehungsweise des reflektierten Anteiles 32 kann zweckmäßigerweise durch einen geeignet geformten Lichtleiter 10, bestehend aus einem hochtransparenten und gut spritzgießfähigen Kunststoff wie beispielsweise PMMA, erreicht werden, der gleichzeitig die Grundseite des Gehäuses 6 bildet und flächig über eine transparente Klebefolie 36 mit der Windschutzscheibe 2 verbunden ist. Durch geeignete Formung, vorzugsweise im Spritzgußverfahren, kann der Lichtleiter 10 eingeformte linsenförmige Strukturen 31 erhalten, die für die gewünschte Fokussierung beziehungsweise Parallelisierung des von der LED 14 emittierten divergierenden Lichtes sowie der von der Photodiode 16 detektierten Lichtanteile sorgen.

Auf der Platine 8 ist weiterhin ein Umgebungslichtsensor 22 angeordnet, der von außen durch die'Windschutzscheibe 2 des Kraftfahrzeuges 1 fallendes Umgebungslicht in seiner Helligkeit erfassen und ein davon abhängiges Steuersignal für eine automatische Lichtsteuerung im Kraftfahrzeug generieren kann. Zweckmäßigerweise reagiert der Umgebungslichtsensor 22 auf Sonnenlicht, um auf diese Weise ein unbeabsichtigtes Abschalten der Fahrzeugscheinwerfer in hell beleuchteten Tunnel oder Unterführungen mit starken künstlichen Lichtquellen auszuschließen.

Erkennbar ist zudem ein Fernsensor 20, der einen relativ schmalen Öffnungskegel 40 für einfallendes Licht aufweist und vorzugsweise zur frühzeitigen Erkennung von Tunneleinfahrten oder dergleichen zu erwartenden dunklen Durchfahrten geeignet ist. Zur Bündelung des auf den Fernsensor 20 gelangenden Lichtanteils ist ebenfalls eine eingeformte Linsenstruktur 33 im Lichtleiter 10 vorzusehen.

Die Figur 2 zeigt eine schematische Draufsicht auf den erfindungsgemäßen optischen Sensor 4, der in diesem Ausführungsbeispiel in einem rechteckförmigen Gehäuse 6 untergebracht ist. Von dem optischen Sensor 4 ist in dieser Ansicht, senkrecht von außen durch die Windschutzscheibe 2 des Kraftfahrzeuges 1, der Lichtleiter 10 mit der umhüllenden Gehäusekante erkennbar. Weiterhin ist ein Ausschnitt erkennbar, der einen Lichtdurchtritt zu dem Umgebungslichtsensor 22 ermöglicht.

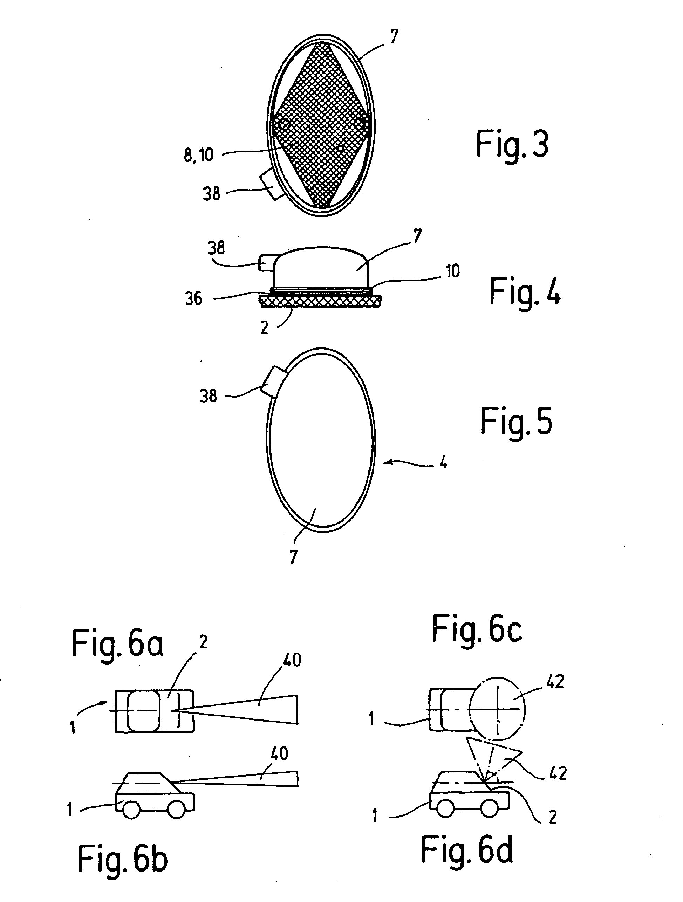

Figur 3 zeigt eine alternative Ausführungsform des optischen Sensors 4 mit einem ovalen Gehäuse 7 und einer darin untergebrachten passenden rautenförmigen Platine 8 sowie einem ebenso rauten- oder trapezförmigen Lichtdurchtritt mit darin eingeformten fokussierenden Strukturen. Auch hier ist ein Lichtleiter 10 für den Umgebungslichtsensor 22 und/oder für den wenigstens einen Fernsensor 20 erkennbar, die jedoch von außen in dieser Darstellung nicht sichtbar sind.

Figur 4 zeigt den optischen Sensor 4 entsprechend Figur 3 in einer schematischen Seitenansicht, wobei gleiche Teile wie in den vorangegangenen Figuren mit gleichen Bezugszeichen versehen und nicht nochmals erläutert sind. Erkennbar ist das Gehäuse 7 mit leicht nach oben gewölbtem Deckel und seitlich herausgeführtem Stecker 38 zur elektrischen Verbindung mit einer hier nicht dargestellten Auswerteelektronik. Anstatt einer elektrischen Verbindung zu einer zentralen Auswerte- und/oder Steuereinheit über den Stecker 38 kann auch eine optische Signalübertragung mittels Lichtwellenleiter realisiert werden.

Der Lichtleiter 10 mit den darauf aufgebrachten fokussierenden Strukturen stellt gleichzeitig die Grundplatte für das Gehäuse 7 dar, die über die transparente Klebefolie 36 flächig mit der Innenseite der Windschutzscheibe 2 des Kraftfahrzeuges 1 verklebt ist. Der Lichtleiter 10 ist dabei so ausgeführt, daß alle optischen Strukturen sowohl für den Regensensor 14, 16 als auch für die Helligkeitssensoren 20, 22 darin enthalten sind. Wird beispielsweise für den Regensensor Infrarotlicht verwendet, so können die Bereiche für die Regensensorfunktion aus schwarzem Kunststoff bestehen. Die für die Helligkeitssensoren 20, 22 notwendigen Bereiche des Lichtleiters 10 sind dann zweckmäßigerweise in transparentem Kunststoff ausgeführt. Der Lichtleiter 10 kann hierzu entweder im sogenannten Zweifarben-Spritzverfahren hergestellt sein oder beispielsweise aus mehreren jeweils einfarbigen Kunststoffsegmenten zusammengefügt sein.

Figur 5 zeigt nochmals zur Verdeutlichung eine Draufsicht oben auf den gewölbten Gehäusedeckel 7 des optischen Sensors 4 mit seitlich herausgeführtem Stekker 38.

In den Figuren 6a bis 6d sind in schematischen Darstellungen unterschiedliche Öffnungskegel für den Fernsensor 20 und für den Umgebungslichtsensor 22 des optischen Sensors 4 dargestellt.

Figur 6a zeigt eine schematische Draufsicht auf ein Kraftfahrzeug 1 mit einer Windschutzscheibe 2. Erkennbar ist hier ein relativ spitzwinkeliger Öffnungskegel 40 in Fahrtrichtung für den Fernsensor 20, der gewährleisten kann, daß nur direkt in Fahrtrichtung liegende dunkle Abschnitte erfaßt werden.
Figur 6b zeigt in einer Seitenansicht auf das Kraftfahrzeug 1 entsprechend Figur 6a den Öffnungskegel 40, der in vertikaler Richtung einen noch kleineren Öffnungswinkel aufweist als in horizontaler Richtung.

Figur 6c zeigt dagegen in einer Draufsicht einen relativ weiten Öffnungskegel 42 für den Umgebungslichtsensor 22, der es ermöglicht, die in erster Linie von oben einfallenden Lichtanteile zuverlässig zu detektieren und als Umgebungshelligkeit auszuwerten.

Figur 6d zeigt in einer Seitenansicht den im wesentlichen nach oben gerichteten Öffnungskegel 42.

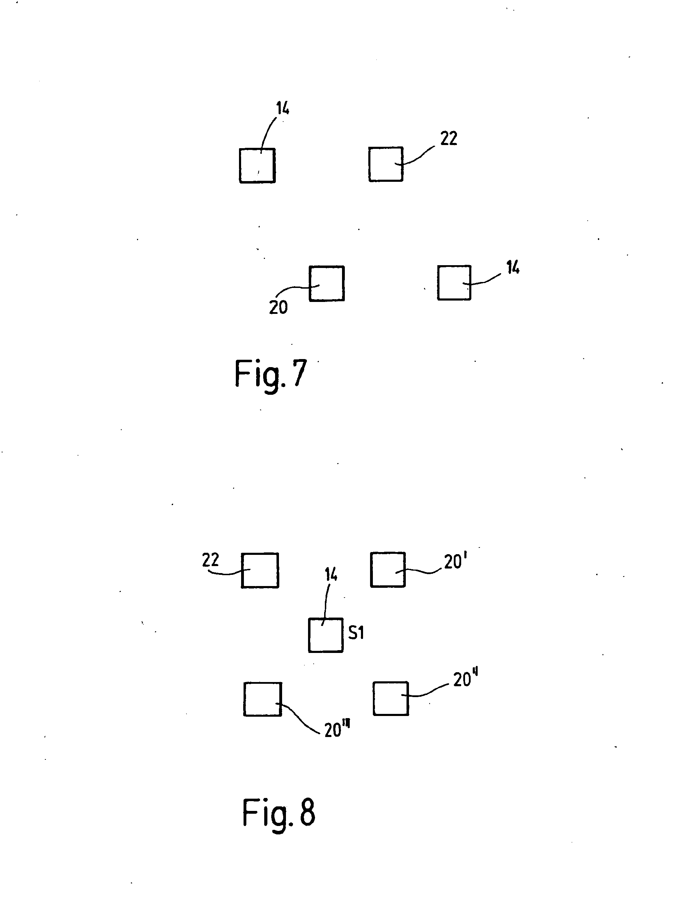

In den Figuren 7 und 8 sind jeweils rein schematisch mögliche Ausstattungsvarianten des optischen Sensors 4 gezeigt. Gemäß der in Figur 7 gezeigten Variante kann der optische Sensor 4 den Fernsensor 20, den Umgebungslichtsensor 22 sowie zwei Sendedioden 14 aufweisen. Hinsichtlich der Funktion der einzelnen Bauelemente wird auf die Beschreibung zu den vorhergehenden Figuren verwiesen. Durch die Anordnung von zwei Sendedioden 14 wird es möglich, die Genauigkeit der Auswertung des Regensensorsignals zu erhöhen. Die Sendedioden 14 können hierbei jeweils einen zueinander beabstandeten Bereich der Windschutzscheibe 2 mit einer Lichtstrahlung beaufschlagen, so daß eine Benetzung der Windschutzscheibe verifizierbar ist. Wäre nur eine Sendediode 14 vorgesehen, könnte schon ein einzelner Tropfen zur Auslösung der Regensensorfunktion führen. Durch das Vorsehen von zwei Sendedioden 14 kann überprüft werden, ob lediglich ein einzelner Tropfen zufällig genau auf den Detektionsbereich der einen Sendediode 14 gelangt ist, oder ob durch die Überwachung zueinander beabstandeter Bereiche auch der zweite Bereich mit einem Feuchtigkeitstropfen benetzt ist. Hierdurch kann die Aussagewahrscheinlichkeit erhöht werden, daß tatsächlich eine derartige Benetzung der Windschutzscheibe erfolgte, die eine Aktivierung der Scheibenwischvorrichtung erfordert.

Gemäß der in Figur 8 gezeigten Ausstattungsvariante ist neben einer Sendediode 14 und einem Umgebungslichtsensor 22 vorgesehen, daß der optische Sensor 4 insgesamt drei Fernsensoren 20', 20" und 20"' aufweist. Jeder der Fernsensoren 20', 20" und 20"' kann hier mit einem entsprechend schmalen Öffnungskegel 40 (Figuren 6a, 6b) in eine andere Richtung weisen. Hierdurch wird es beispielsweise möglich, bei Kurvenfahrten relativ plötzlich auftretende Tunneleinfahrten oder dergleichen rechtzeitig zu erkennen. Die Funktionalität und der Komfort des optischen Sensors 4 wird hierdurch verbessert.

Es ist klar, daß entsprechend der in den Figuren 7 und 8 gezeigten Ausstattungsvarianten die Platine 8 sowie der Lichtleiter 10 eine entsprechend angepaßte Aufbau und Strukturierung aufweisen.

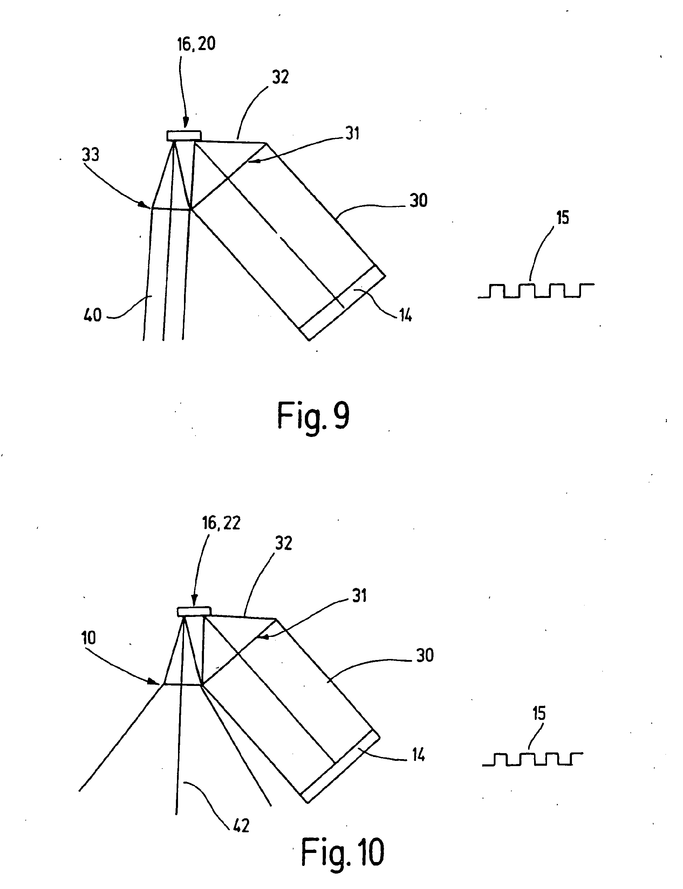

In den Figuren 9 und 10 sind schematisch Beispiele, die von den Ansprüchen nicht abgedeckt werden dargestellt, bei denen einzelne Bauelemente des Sensors 4 gemeinsam sowohl für die Regensensorfunktion als auch für die automatische Lichtsteuerungsfunktion eingesetzt werden. Die in den Figuren 9 und 10 verwendeten Bezugszeichen beziehen sich auf die Erläuterungen zu den vorhergehenden Figuren 1 bis 8.

Gemäß Figur 9 ist vorgesehen, daß der Empfänger 16 des Regensensors gleichzeitig den Fernsensor 20 bildet. Hierdurch wird ein optisches Bauelement, nämlich eine Photodiode, gegenüber der in Figur 1 gezeigten Ausführungsvariante eingespart. Um dies zu erreichen, sind die optischen Strukturen, mittels denen die Fokussierung beziehungsweise Umlenkung der elektromagnetischen Wellen erfolgt, so ausgerichtet, daß sowohl die von der Windschutzscheibe 2 reflektierten Strahlen 32 auf den Empfänger 16, 20 fallen als auch die über die Struktur 33 des Lichtleiters 10 in dem Öffnungskegel 40 sensierten elektromagnetischen Wellen für den Fernsensor. Der Empfänger übernimmt somit quasi eine Doppelfunktion. Um dies zu ermöglichen ist vorgesehen, daß die Sendediode 14 - wie mit einem Signalverlauf 15 angedeutet - getaktet angesteuert wird. Entsprechend eines Tastverhältnisses des Signales 15 wird die Sendediode 14 dazu angeregt, pulsweise die elektromagnetischen Wellen 30 abzustrahlen. Wird dieses Tastverhältnis der Auswerteschaltung mitgeteilt, kann diese die vom Empfänger 16, 20 empfangenen Signale eindeutig dem Sender 14 oder eventuell im Öffnungskegel 40 einfallender elektromagnetischer Wellen der Umgebungshelligkeit zuordnen. Somit wird es möglich, mit der Auswerteschaltung sowohl die Regensensorfunktion als auch die Fernsensorfunktion entweder gemeinsam oder getrennt auszuwerten und die Entscheidung bereitzustellen, ob die Scheibenwischanlage und/oder die Beleuchtungsanlage des Kraftfahrzeuges in Betrieb zu setzen ist.

In der in Figur 10 gezeigten schematischen Ansicht wird angedeutet, daß die gemäß Figur 9 vorgesehene Kopplung der Funktion des Empfängers 16, 20 für den Regensensor und den Fernsensor selbstverständlich auch für eine Kopplung des Regensensors und des Umgebungslichtsensors nutzbar ist. Hierzu ist der Lichtleiter 10, der den Öffnungskegel 42 erfaßt, so strukturiert, daß die fokussierten elektromagnetischen Wellen ebenfalls auf den Empfänger 16, 22 gelenkt werden. Somit wird ebenfalls die Einsparung eines Photoelementes möglich, da nur noch ein gemeinsames Photoelement 16, 22 für die Regensensorfunktion und die Umgebungshelligkeitssensorfunktion notwendig ist.

## Patentansprüche

1. Optischer Sensor für Kraftfahrzeuge, zur Erfassung von sichtbeeinflussenden Umgebungsparametern, mit wenigstens einem Sender (14) und wenigstens einem Empfänger (16) für elektromagnetische Wellen, wobei eine Windschutzscheibe (2) in einer Meßstrecke (30, 32) zwischen dem wenigstens einen Sender (14) und dem wenigstens einem Empfänger (16) angeordnet ist und eine Wellenausbreitung zwischen dem wenigstens einen Sender (14) und dem wenigstens einen Empfänger (16) derart beeinflußt, daß sich bei Ausbildung eines Belages auf der Windschutzscheibe(2), insbesondere bei einer Benetzung durch Niederschlag, ein vom Empfänger (16) generiertes Ausgangssignal ändert, das der Ansteuerung einer Scheibenwischvorrichtung dient, wobei ein Lichtleiter (10) mit darin eingebrachten Linsenstrukturen (31) zur Lichtbündelung vorgesehen ist und mit einem Helligkeitssensor (22) für Umgebungslicht, **dadurch gekennzeichnet, dass** als weiterer Empfänger, neben dem Umgebungslichtsensor (22), ein Fernsensor (20) mit einem relativ schmalen, in Fahrtrichtung weisenden Öffnungskegel (40) für einfallendes Licht vorgesehen ist und der Ansteuerung einer Beleuchtungsanlage des Kraftfahrzeuges dient, wobei zur Bündelung des auf den Femsensor (20) gelangenden Lichtanteils ebenfalls eine eingeformte Linsenstruktur (33) im Lichtleiter (10) vorgesehen ist.

2. Optischer Sensor nach Anspruch 1, **dadurch gekennzeichnet, daß** der optische Sensor (4) ein gemeinsames von der Benetzung der Windschutzscheibe und der Umgebungshelligkeit abhängiges Ausgangssignal an eine nachgeordnete Auswerteschaltung liefert, die einer Ansteuerung der Scheibenwischanlage und der Beleuchtungsanlage dient.

3. Optischer Sensor nach einem der vorhergehenden Ansprüche, **dadurch gekennzeichnet, daß** der wenigstens eine Sender eine LED (14) ist.

4. Optischer Sensor nach Anspruch 3, **dadurch gekennzeichnet, daß** der erste Empfänger, der das von der wenigstens einen LED (14) emittierte optische Signal detektiert, eine Photodiode (16) ist.

5. Optischer Sensor nach einem der vorhergehenden Ansprüche, **dadurch gekennzeichnet, daß** der Umgebungslichtsensor (22) einen Öffnungswinkel von circa 40° mit einer Öffnungsrichtung in Fahrtrichtung nach schräg oben sensiert.

6. Optischer Sensor nach Anspruch 1, **dadurch gekennzeichnet, daß** der wenigstens eine Fernsensor (20) einen Öffnungswinkel von circa 7° mit einer Öffnungsrichtung horizontal sensiert.

7. Optischer Sensor nach einem der vorhergehenden Ansprüche, **dadurch gekennzeichnet, daß** der wenigstens eine Fernsensor (20) und der wenigstens eine Umgebungslichtsensor (22) auf ultraviolettes Licht, insbesondere auf Sonnenlicht, empfindlich sind.

8. Optischer Sensor nach einem der vorhergehenden Ansprüche, **dadurch gekennzeichnet, daß** eine automatische Tag/Nacht-Umschaltung der Regensensor-Empfindlichkeit mittels des Umgebungslichtsensors erfolgt.

9. Optischer Sensor nach einem der vorhergehenden Ansprüche, **dadurch gekennzeichnet, daß** der Empfänger (16) und der wenigstens eine Fernsensor (20) und/oder der Umgebungslichtsensor (22) von einem Photoelement gebildet werden.

10. Optischer Sensor nach einem der Ansprüche 3 bis 4, **dadurch gekennzeichnet, daß** die LED (14) mit einem getakteten Signal (15) ansteuerbar ist.

11. Optischer Sensor nach einem der vorhergehenden Ansprüche, **dadurch gekennzeichnet, daß** die Elektronikkomponenten des optischen Sensors (4) in SMD-Technik auf einer gemeinsamen Platine montiert sind.

12. Optischer Sensor nach einem der vorhergehenden Ansprüche, **dadurch gekennzeichnet, daß** der optische Sensor (4) in einem ovalen Steckergehäuse (7) montiert ist

13. Optischer Sensor nach Anspruch 11, **dadurch gekennzeichnet, daß** die Platine (8) eine trapezförmige oder rautenförmige Kontur aufweist.

14. Optischer Sensor nach einem der vorhergehenden Ansprüche, **dadurch gekennzeichnet, daß** der Lichtleiter (10) eine trapezförmige oder rautenförmige Kontur aufweist.

15. Optischer Sensor nach einem der vorhergehenden Ansprüche, **dadurch gekennzeichnet, daß** eine Übertragung der Sensordaten mittels einer Datenleitung an eine zentrale Auswerte- und/oder Steuereinheit erfolgt, wobei die Datenleitung mit elektrischer oder optischer Signalübertragung erfolgt.

16. Optischer Sensor nach einem der vorhergehenden Ansprüche, **dadurch gekennzeichnet, daß** nur ein Lichtleiter (10) mit ausreichender Transparenz für beide optische Funktionen vorgesehen ist

17. Optischer Sensor nach einem der vorhergehenden Ansprüche, **dadurch gekennzeichnet, daß** bei Einsatz von IR(Infrarot)-Licht der Lichtleiter (10) für die Regensensorfunktion aus schwarzem Kunststoff besteht.

18. Optischer Sensor nach einem der vorhergehenden Ansprüche, **dadurch gekennzeichnet, daß** für die Empfänger (20, 22) des Fernsensors (20) und/oder des Umgebungslichtsensors (22) optische Bereiche im Lichtleiter (10) aus transparentem (klarem) Kunststoff vorgesehen sind, die sichtbares Licht durchlassen.

19. Optischer Sensor nach einem der vorhergehenden Ansprüche, **dadurch gekennzeichnet, daß** der Lichtleiter (10) aus einem Kunststoffteil im Zweifarb-Spritzverfahren besteht.

20. Optischer Sensor nach einem der vorhergehenden Ansprüche, **dadurch gekennzeichnet, daß** der Lichtleiter (10) aus mehreren jeweils einfarbigen Kunststoffsegmenten zusammengefügt ist.

21. Optischer Sensor nach einem der vorhergehenden Ansprüche, **dadurch gekennzeichnet, daß** der optische Sensor (4) von innen mit der Windschutzscheibe (2) verklebt ist.

22. Optischer Sensor nach einem der vorhergehenden Ansprüche, **dadurch gekennzeichnet, daß** der optische Sensor (4) über einen Befestigungsrahmen mit der Windschutzscheibe (2) verbunden, insbesondere geklipst oder geklemmt, ist.

23. Optischer Sensor nach einem der vorhergehenden Ansprüche, **dadurch gekennzeichnet, daß** eine transparente beidseitig selbstklebende Folie (36) als Verbindung zwischen Windschutzscheibe (2) und Lichtleiter (10) des optischen Sensors (4) vorgesehen ist.

24. Optischer Sensor nach einem der vorhergehenden Ansprüche, **dadurch gekennzeichnet, daß** bei Nebel sowohl die Scheibenwischer wie auch die Nebelscheinwerfer eingeschaltet werden.

25. Optischer Sensor nach einem der vorhergehenden Ansprüche, **dadurch gekennzeichnet, daß** bei starkem Nebel sowohl die Scheibenwischer wie auch die Nebelscheinwerfer und/oder die Nebelschlußleuchten eingeschaltet werden.

## Claims

1. Optical sensor for motor vehicles for the purpose of detecting vision-affecting ambient parameters, having at least one transmitter (14) and at least one receiver (16) for electromagnetic waves, a windscreen (2) being arranged in a measuring path (30, 32) between the at least one transmitter (14) and the at least one receiver (16) and influencing a wave propagation between the at least one transmitter (14) and the at least one receiver (16) in such a way that an output signal generated by the receiver (16) changes upon formation of a coating on the windscreen (2), in particular upon wetting by precipitation, the said signal serving to drive a wiper device, there being provided a light guide (10) which has incorporated lens structures (31) for focusing light, and having a brightness sensor (22) for ambient light, **characterized in that**, in addition to the ambient light sensor (22), there is provided as a further receiver a remote sensor (20) which has a relatively narrow opening cone (40), pointing in the driving direction, for incident light and serves for driving a lighting system of the motor vehicle, an incorporated lens structure (33) likewise being provided in the light guide (10) in order to focus the light fraction reaching the remote sensor (20).

2. Optical sensor according to Claim 1, **characterized in that** the optical sensor (4) supplies a common output signal dependent on the wetting of the windscreen and the ambient brightness to a downstream evaluation circuit which serves to drive the wiper system and the illuminating system.

3. Optical sensor according to one of the preceding claims, **characterized in that** the at least one transmitter is an LED (14).

4. Optical sensor according to Claim 3, **characterized in that** the first receiver, which detects the optical signal emitted by the at least one LED (14), is a photodiode (16).

5. Optical sensor according to one of the preceding claims, **characterized in that** the ambient light sensor (22) senses obliquely upwards an opening angle of circa 40° with an open direction in the driving direction.

6. Optical sensor according to Claim 1, **characterized in that** the at least one remote sensor (20) senses an opening angle of circa 7° with an opening direction which is horizontal.

7. Optical sensor according to one of the preceding claims, **characterized in that** the at least one remote sensor (20) and the at least one ambient light sensor (22) are sensitive to ultraviolet light, in particular to sunlight.

8. Optical sensor according to one of the preceding claims, **characterized in that** an automatic day/night switchover of the rain sensor sensitivity is performed by means of the ambient light sensor.

9. Optical sensor according to one of the preceding claims, **characterized in that** the receiver (16) and the at least one remote sensor (20) and/or the ambient light sensor (22) are formed by a photoelement.

10. Optical sensor according to one of Claims 3 to 4, **characterized in that** the LED (14) can be driven by a clocked signal (15).

11. Optical sensor according to one of the preceding claims, **characterized in that** the electronic components of the optical sensor (4) are mounted on a common printed circuit board using SMD technology.

12. Optical sensor according to one of the preceding claims, **characterized in that** the optical sensor (4) is mounted in an oval plug housing (7).

13. Optical sensor according to Claim 11, **characterized in that** the printed circuit board (8) has a trapezoidal or rhombic contour.

14. Optical sensor according to one of the preceding claims, **characterized in that** the light guide (10) has a trapezoidal or rhombic contour.

15. Optical sensor according to one of the preceding claims, **characterized in that** the sensor data are transmitted to a central evaluation and/or control unit by means of a data line, the data line being provided by electric or optical signal transmission.

16. Optical sensor according to one of the preceding claims, **characterized in that** only one light guide (10) with adequate transparency is provided for both optical functions.

17. Optical sensor according to one of the preceding claims, **characterized in that** the light guide (10) for the rain sensor function consists of black plastic in the case of the use of IR (infrared) light.

18. Optical sensor according to one of the preceding claims, **characterized in that** optical regions in the light guide (10) of transparent (clear) plastic which pass visible light are provided for the receivers (20, 22) of the remote sensor (20) and/or of the ambient light sensor (22).

19. Optical sensor according to one of the preceding claims, **characterized in that** the light guide (10) consists of a plastic part made using the two-colour injection moulding method.

20. Optical sensor according to one of the preceding claims, **characterized in that** the light guide (10) is joined together from a number of respectively single-colour plastic segments.

21. Optical sensor according to one of the preceding claims, **characterized in that** the optical sensor (4) is bonded to the windscreen (2) from the inside.

22. Optical sensor according to one of the preceding claims, **characterized in that** the optical sensor (4) is connected, in particular clipped or clamped to the windscreen (2) via a fastening frame.

23. Optical sensor according to one of the preceding claims, **characterized in that** a transparent double-sided self-adhesive film (36) is provided as connection between the windscreen (2) and light guide (10) of the optical sensor (4).

24. Optical sensor according to one of the preceding claims, **characterized in that** both the wiper system and the front fog lamps are switched on in the event of fog.

25. Optical sensor according to one of the preceding claims, **characterized in that** both the wiper system and the front fog lamps and/or the rear fog lamps are switched on in the event of dense fog.

## Revendications

1. Capteur optique pour véhicule automobile destiné à capter des paramètres d'environnement influençant la visibilité, comprenant :
au moins un émetteur (14) et au moins un récepteur (16) pour des ondes électromagnétiques,
un pare-brise (2) placé dans le chemin de mesure (30, 32) entre au moins un émetteur (14) et au moins un récepteur (16), le développement de l'onde étant influencé entre au moins un émetteur (14) et au moins un récepteur (16) de sorte qu'un dépôt formé sur le pare-brise (2) notamment un dépôt d'humidité par une précipitation, modifie le signal de sortie généré par le récepteur (16) et sert à commander un dispositif d'essuie-glace, et
un guide de lumière (10) avec des structures de lentilles intégrées (31) pour regrouper le faisceau lumineux, et un capteur de lumière ambiante (22) pour capter la lumière ambiante,
**caractérisé en ce qu'**
un autre récepteur, à côté du capteur de lumière ambiante (22) est un télécapteur (20) à cône d'ouverture (40) relativement étroite, dirigé dans la direction de déplacement pour la lumière incidente et sert à commander une installation d'éclairage du véhicule automobile, et une structure de lentilles (33), formée dans le guide de lumière (10) regroupe la partie de lumière tombant sur le télécapteur (20).

2. Capteur optique selon la revendication 1,
**caractérisé en ce que**
le capteur optique (4) fournit un signal de sortie commun dépendant du mouillage du pare-brise et de la luminosité ambiante, ce signal étant transmis à un circuit d'exploitation en aval qui sert à commander l'installation d'essuie-glace et l'installation d'éclairage.

3. Capteur optique selon l'une des revendications précédentes,
**caractérisé en ce qu'**
au moins un émetteur est une diode LED (14).

4. Capteur optique selon la revendication 3,
**caractérisé en ce que**
le premier récepteur qui détecte le signal optique émis par au moins une diode électroluminescente LED (14) est une photodiode (16).

5. Capteur optique selon l'une des revendications précédentes,
**caractérisé en ce que**
le capteur de lumière ambiante (22) présente un angle d'ouverture d'environ 40° avec une direction d'ouverture inclinée vers le haut par rapport à la direction de déplacement du véhicule.

6. Capteur optique selon la revendication 1,
**caractérisé en ce qu'**
au moins le télécapteur (20) et au moins le capteur de lumière ambiante (22) ont un angle d'ouverture d'environ 7° avec une direction d'ouverture horizontale dans la direction de déplacement du véhicule.

7. Capteur optique selon l'une des revendications précédentes,
**caractérisé par**
au moins le télécapteur (20) et au moins le capteur de lumière ambiante (22) sont sensibles à la lumière ultraviolette, en particulier à la lumière solaire.

8. Capteur optique selon l'une des revendications précédentes,
**caractérisé par**
une commutation automatique jour/nuit de la sensibilité du capteur de pluie par l'intermédiaire du capteur de lumière ambiante.

9. Capteur optique selon l'une quelconque des revendications précédentes,
**caractérisé en ce que**
le récepteur (16) et au moins le télécapteur (20) et/ou le capteur de lumière ambiante (22) sont constitués par un élément photoélectrique.

10. Capteur optique selon l'une des revendications 3 à 4,
**caractérisé en ce que**
la diode électroluminescente LED (14) est commandée par un signal découpé (15).

11. Capteur optique selon l'une quelconque des revendications précédentes,
**caractérisé en ce que**
les composants électroniques du capteur optique (4) sont montés sur une platine commune en technique SMD.

12. Capteur optique selon l'une quelconque des revendications précédentes,
**caractérisé en ce que**
le capteur optique (4) est monté dans un boîtier de connecteur de forme ovale (7).

13. Capteur optique selon la revendication 11,
**caractérisé en ce que**
la platine (8) a un contour trapézoïdal ou un contour en losange.

14. Capteur optique selon l'une quelconque des revendications précédentes,
**caractérisé en ce que**
le guide de lumière (10) a un contour trapézoïdal ou en losange.

15. Capteur optique selon l'une quelconque des revendications précédentes,
**caractérisé par**
la transmission des données du capteur par une ligne de transmission de données vers une unité d'exploitation et/ou de commande centrale, la ligne de transmission de données assurant une transmission électrique ou optique des signaux.

16. Capteur optique selon l'une quelconque des revendications précédentes,
**caractérisé par**
seulement un guide de lumière (10) ayant une transparence suffisante pour les deux fonctions optiques.

17. Capteur optique selon l'une quelconque des revendications précédentes,
**caractérisé en ce que**
le guide de lumière (10) pour la fonction de capteur de pluie est réalisé en matière plastique noire pour utiliser de la lumière infrarouge (lumière IR).

18. Capteur optique selon l'une quelconque des revendications précédentes,
**caractérisé en ce que**
pour les récepteurs (20, 22) du télécapteur (20) et/ou du capteur de lumière ambiante (22) on a des zones optiques dans le guide de lumière (10) en matière plastique transparente (matière plastique claire) qui laisse passer la lumière visible.

19. Capteur optique selon l'une quelconque des revendications précédentes,
**caractérisé en ce que**
le guide de lumière (10) est une pièce en matière plastique obtenue par une injection bicolore.

20. Capteur optique selon l'une quelconque des revendications précédentes,
**caractérisé en ce que**
le guide de lumière (10) est fabriqué par la combinaison de chaque fois plusieurs segments de matière plastique monochrome.

21. Capteur optique selon l'une quelconque des revendications précédentes,
**caractérisé en ce que**
le capteur optique (4) est collé contre la face intérieure du pare-brise (2).

22. Capteur optique selon l'une quelconque des revendications précédentes,
**caractérisé en ce que**
le capteur optique (4) est relié au pare-brise (2) par l'intermédiaire d'un châssis de fixation, notamment par une liaison enclipsée ou serrée.

23. Capteur optique selon l'une quelconque des revendications précédentes,
**caractérisé par**
un film autocollant (26) double face, transparent assurant la liaison entre le pare-brise (2) et le guide de lumière (10) du capteur optique (4).

24. Capteur optique selon l'une quelconque des revendications précédentes,
**caractérisé en ce qu'**
en cas de brouillard, il branche à la fois les essuie-glace et les projecteurs antibrouillard.

25. Capteur optique selon l'une quelconque des revendications précédentes,
**caractérisé en ce qu'**
en cas de fort brouillard, il branche à la fois les essuie-glace et les projecteurs antibrouillard et/ou les feux arrières antibrouillard.
